# EUROPEAN PATENT SPECIFICATION

(11) **EP 3 716 596 B1**
(45) Date of publication and mention of the grant of the patent: **05.01.2022**
(21) Application number: 19166144.6
(22) Date of filing: 29.03.2019
(51) Int. Cl.: H04M 3/26, H04M 3/00, H04Q 1/14

(54) **TESTING DEVICE FOR A XDSL DISTRIBUTION UNIT OF A TELECOMMUNICATION SYSTEM, TELECOMMUNICATION SYSTEM AND METHOD FOR TESTING THE SAME**
PRÜFVORRICHTUNG FÜR EINE XDSL-VERTEILUNGSEINHEIT EINES TELEKOMMUNIKATIONSSYSTEMS, TELEKOMMUNIKATIONSSYSTEM UND VERFAHREN ZUR PRÜFUNG DAVON
DISPOSITIF DE TEST POUR UNE UNITÉ DE DISTRIBUTION XDSL D'UN SYSTÈME DE TÉLÉCOMMUNICATION, SYSTÈME DE TÉLÉCOMMUNICATION ET SON PROCÉDÉ DE TEST

(43) Date of publication of application: 30.09.2020
(73) Proprietor: Corning Research & Development Corporation, Corning, New York 14831 (US)
(72) Inventor: FASCE, Xavier, 41453 Neuss (DE); HAJOK, Johann, 44795 Bochum (DE); LUTTERKORDT, Ulrich, 42111 Wuppertal (DE); OTTO, Hans Dieter, 51688 Wipperfürth (DE)
(74) Representative: Sturm, Christoph

(56) References cited:
- EP-A1- 2 553 939
- EP-A2- 0 486 331

## Description

The present patent application relates to a testing device for a xDSL distribution unit of a telecommunication system.

DE 20 2007 014 702 U1 show a xDSL distribution unit of a telecommunication system designed a xDSL distribution block. The xDSL distribution block comprises a plurality of distribution strips stacked above each other. Each distribution strips comprises a plurality of functional elements. Each functional element has at least three contact elements. The contact elements are provided by contact springs. The contact elements have cutting contacts being configured to connect a wire to the respective contact element. The cutting contacts are provided by IDC contacts. Each functional element has a first contact element to which a wire carrying a voice signal can be connected, a second contact element to which a wire carrying a data signal can be connected and a third contact element to which a wire carrying a line signal being a combined voice and data signal can be connected. Each functional element of the xDSL distribution block acts together with a xDSL splitter. The respective xDSL splitter is plugged into the respective functional element at a first side of the respective functional element. DE 20 2007 014 702 U1 discloses a plug which can be plugged into the respective functional from an opposite second side of the respective functional element while the respective xDSL splitter is plugged into the respective functional element at the first side of the same. This plug is used to change for a customer the provided service, namely from a conventional xDSL service to a VOICE OVER IP service or to a DSL PURE service.

WO 02/47429 A1 discloses a telecommunication system having a xDSL distribution unit called main distribution frame, a splitter unit operatively coupled with the main distribution frame, a voice switch and a multiplexer both operatively coupled to the splitter unit and an access panel including testing ports for allowing a testing device to be coupled to the access panel. The testing device is used to testing communication lines of the telecommunication system.

EP 0 486 331 A2 discloses a testing device for distribution unit of a telecommunication system, the testing device being configured to be plugged into a functional element of the distribution unit. The testing deice comprises a contact tongue section through which the testing device can be plugged into a functional element, the contact tongue section having at a first side or upper side of the contact tongue section contact sections, and at a second side or lower side of the contact tongue section contact sections. When the testing device is plugged into the functional element of the distribution unit from a first side of the functional element in a first orientation of the testing device, the testing device electrically connects first and second contact elements of the functional element. When the testing device is plugged into the functional element of the distribution unit from the first side of the functional element in a second orientation of the testing device, the testing device electrically connects second and third contact elements of the functional element.

EP 2 553 939 A1 discloses other prior art.

The present application is based on the object to provide a novel testing device for a xDSL distribution unit of a telecommunication system.

The testing device according to the present patent application is defined in claim 1.

The testing device according to the present patent application is configured to be plugged into a functional element of the xDSL distribution unit, when a xDSL splitter has been pulled out of the respective functional element.

The functional element of the xDSL distribution unit has at least three contact elements with cutting contacts being configured to connect a wire to the respective contact element, namely a first contact element to which a wire carrying a voice signal can be connected, a second contact element to which a wire carrying a data signal can be connected and a third contact element to which a wire carrying a line signal being a combined voice and data signal can be connected.

The testing device according to the present patent application comprises a contact tongue section through which the testing device can be plugged into a functional element. The contact tongue section of the testing device has at a first side or upper side of the contact tongue section four contact sections, and at a second side or lower side of the contact tongue section two contact sections. A first contact section and a third contact section provided at the first side or upper side of the contact tongue section are both electrically connected to a fifth contact section provided at the second side or lower side of the contact tongue section. A second contact section and a fourth contact section provided at the first side or upper side of the contact tongue section are both electrically connected to a sixth contact section provided at the second side or lower side of the contact tongue section.

When the testing device is plugged into the functional element of the xDSL distribution unit from a first side of the functional element in a first orientation of the testing device, the testing device electrically connects the first and second contact elements of the functional element.

When the testing device is plugged into the functional element of the xDSL distribution unit from the first side of the functional element in a second orientation of the testing device, the testing device electrically connects the second and third contact elements of the functional element.

The testing device according to the present patent application allows a very convenient testing of communication lines of the telecommunication system. The communication lines can be tested between different connectivity points of the telecommunication system. Depending on the orientation of the testing device and on the side from which the same is plugged into the respective functional element, the testing device connects through different contact elements of the respective functional element.

According to a preferred embodiment, when the testing device is plugged into the functional element of the xDSL distribution unit from a second side of the functional element in a third orientation of the testing device, the testing device electrically connects the first, second and third contact elements of the functional element. This further improves testing of communication lines of the telecommunication system Depending on the orientation of the testing device and on the side from which the same is plugged into the respective functional element, the testing device connects through different contact elements of the respective functional element.

According to a preferred embodiment, when the testing device is plugged into the functional element of the xDSL distribution unit from the second side of the functional element in a fourth orientation of the testing device, the testing device electrically connects the first and third contact elements of the functional element. This further improves testing of communication lines of the telecommunication system Depending on the orientation of the testing device and on the side from which the same is plugged into the respective functional element, the testing device connects through different contact elements of the respective functional element.

The contact tongue section may have two contact tongues being separated by a slot, wherein a first contact tongue provides at a first side or upper side the first and a third contact section and at a second side or lower side the fifth contact section, and wherein a second contact tongue provides at a first side or upper side the second and a fourth contact section and at a second side or lower side the sixth contact section. Such a testing device is simple and allows very convenient testing of communication lines of the telecommunication system when the xDSL splitter has been pulled out of the respective functional element.

A telecommunication system according to the present application is defined in claim 7 and a method for testing a telecommunication system is defined in claim 8.

Embodiments of the invention are given in the dependent claims and the description below. Exemplary embodiments will be explained in more detail with reference to the drawing, in which:
- Figure 1: shows a cross-section view of a first alternative of a functional element of a xDSL distribution unit;
- Figure 2: shows a cross-section view of a second alternative of a functional element of a xDSL distribution unit;
- Figure 3: shows an equivalent circuit diagram of the functional element of Figure 1;
- Figure 4: shows the equivalent circuit diagram of Figure 3 together with a xDSL splitter plugged into the functional element;
- Figure 5: shows the equivalent circuit diagram of Figure 3 together with a testing device plugged into the functional element from a first side of the functional element in a first orientation of the testing device;
- Figure 6: shows the equivalent circuit diagram of Figure 3 together with the testing device plugged into the functional element from the first side of the functional element in a second orientation of the testing device;
- Figure 7: shows the equivalent circuit diagram of Figure 3 together with the testing device plugged into the functional element from a second side of the functional element in a third orientation of the testing device;
- Figure 8: shows a top view of the testing device;
- Figure 9: shows a bottom view of the testing device;
- Figure 10: shows an equivalent circuit diagram of the testing device;
- Figure 11: shows a block diagram of a telecommunication system.

The present patent application relates to a testing device for a xDSL distribution unit of a telecommunication system.

A xDSL distribution unit is usually provided as MDF distribution block. Such a distribution block comprises multiple distribution strips stacked above each other. Each distribution strip comprises multiple functional elements.

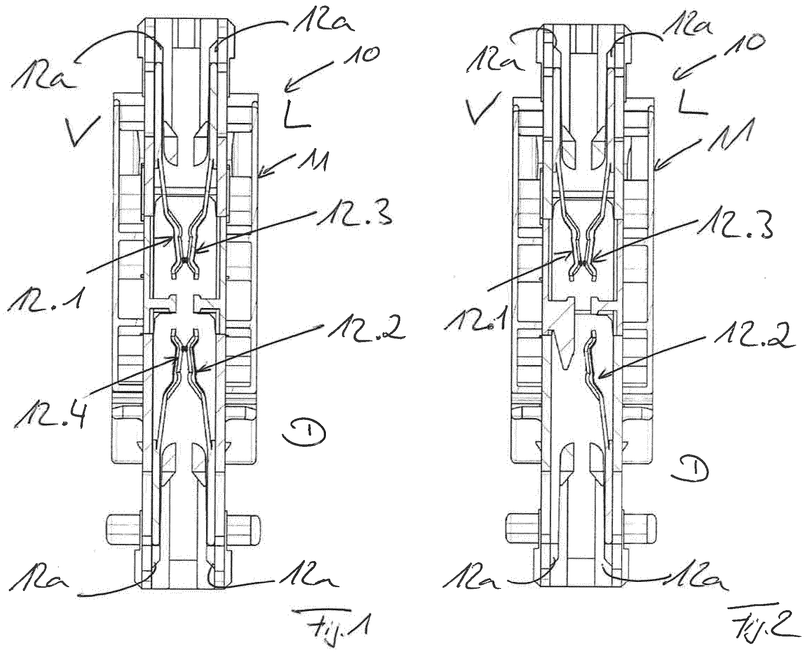

Figures 1 and 2 each show a cross-sectional view of a functional element 10 of a xDSL distribution unit. The respective functional element 10 comprises a housing 11 accommodating at least three contact elements 12. The contact elements 12 are provided by contact springs. Each respective functional element 10 has a cutting contact 12a provided by an IDC contact. Through the cutting contacts 12a wires can be connect to the contact elements 12 of the respective contact element.

The respective functional element 10 has a first contact element 12.1 to which a wire carrying a voice signal can be connected. Said first contact element 12.1 is also called V contact element. The respective functional element 10 has further a second contact element 12.2 to which a wire carrying a data signal can be connected. Said second contact element 12.2 is also called D contact element. The respective functional element 10 has further a third contact element 12.3 to which a wire carrying a line signal being a combined voice and data signal can be connected. Said third contact element 12.3 is also called L contact element.

The functional element 10 of Figure 1 comprises in addition a fourth contact element 12.4 being not in use. The functional element 10 of Figure 2 merely comprises the above three contact elements 12.1, 12.2 and 12.3.

The first contact element 12.1 - meaning the V contact element - and the third contact element 12.3 - meaning the L contact element - of the functional element 10 are both provided at a first side or front side of the functional element 10. The IDC contact 12a of the first and third contact elements 12.1 and 12.3 are accessible at said first side or front side of the functional element 10.

At least the second contact element 12.2 - meaning the D contact element - and eventually the not used fourth contact element 12.4 of the functional element is/are provided at an opposite second side or back side of the functional element 10. The IDC contact 12a of the second contact element 12.2 is accessible at said second side or back side of the functional element 12.

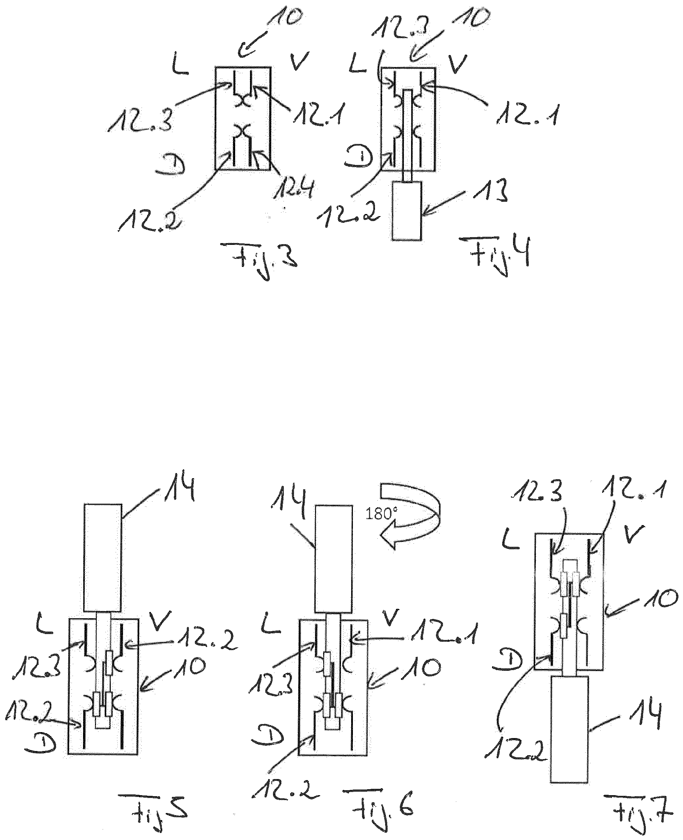

Figure 3 shows a very schematic equivalent circuit diagram of the functional element 10 of Figure 1.

During regular use, a xDSL splitter 13 is plugged into such a functional element 10 (see Figure 4). The xDSL splitter 13 is plugged between the contact elements 12 of the functional element 10, namely from the second side or back side of the functional element 10 at which the second contact element 12.2 - meaning the D contact element - is accessible. When the xDSL splitter 13 is plugged into the functional element 10, the functional element 10 provides a xDSL service to a respective customer to which the functional element 10 is assigned.

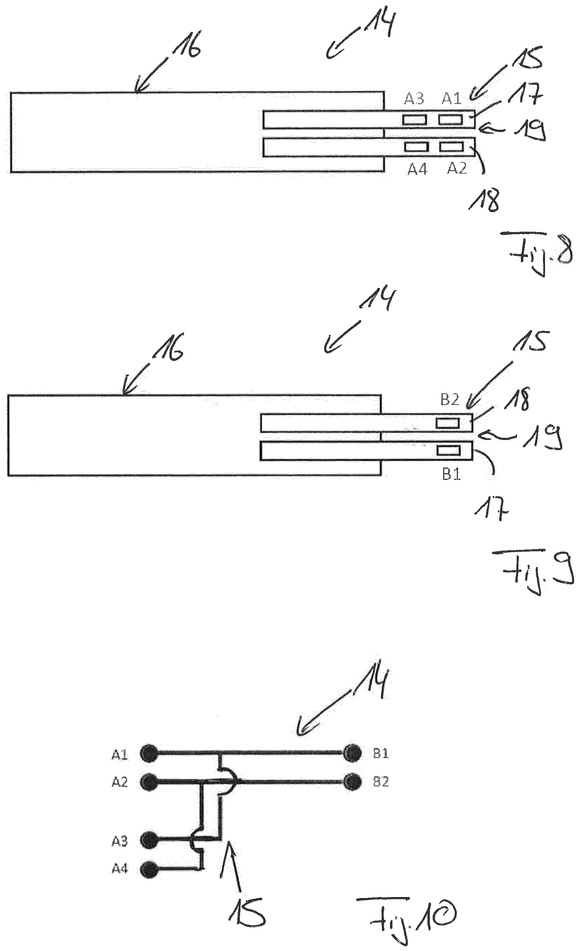

The invention provides a testing device 14 for a xDSL distribution unit of a telecommunication system. Figures 8 and 9 show a top and bottom view of the testing device 14. Figure 10 shows a very schematic equivalent circuit diagram of the testing device 14. Figures 5, 6 and 7 show the testing device 14 plugged into a functional element 10 with the xDSL splitter 13 being removed or pulled out of the respective functional element 10. In Figures 5, 6 and 7 the orientation of the testing device 14 relative to the functional element 10 and the side from which the testing device 14 is plugged into the functional element 10 is different. The testing device is used for testing communication lines of the telecommunication system.

The testing device 14 comprises a contact tongue section 15 through which the testing device 14 can be plugged into the respective functional element 10. The testing device 14 comprises further a handle section 16 carrying the contact tongue section 15, wherein the testing device 14 can be plugged into the respective functional element 10 and pulled out of the respective functional element 10 through the handle section 16.

The contact tongue section 15 of the testing device 14 has at a first side or upper side with four contact sections A1, A2, A3, A4, and further has at a second side or lower side two contact sections B1, B2.

A first contact section A1 and a third contact section A3 provided at the first side or upper side of the contact tongue section 15 are both electrically connected to a fifth contact section B1 provided at the second side or lower side of the contact tongue section 15. A second contact section A2 and a fourth contact section A4 provided at the first side or upper side of the contact tongue section 15 are both electrically connected to a sixth contact section B2 provided at the second side or lower side of the contact tongue section 15.

When the testing device 14 is plugged into the functional element 10 of the xDSL distribution unit from the first side of the functional element 10 in a first orientation of the testing device 14 (see Figure 5), the testing device 14 electrically connects the first contact element 12.1 and second contact element 12.2 - meaning the V contact element and the D contact element - of the functional element 10.

When the testing device 14 is plugged into the functional element 10 of the xDSL distribution unit from the first side of the functional element 10 in a second orientation of the testing device 14 (see Figure 6, testing device turned by 180° compared to Figure 5), the testing device 14 electrically connects the second contact element 12.2 and third contact element 12.3 - meaning the D contact element and the L contact element - of the functional element 10.

When the testing device 14 is plugged into the functional element 10 of the xDSL distribution unit from the second side of the functional element 10 in a third orientation of the testing device 14 (see Figure 7), the testing device 14 electrically connects the first, second and third contact elements 12.1, 12.2 and 12.3 - meaning the V contact element and the D contact element and the L contact element - of the functional element 10.

When the testing device 14 is plugged into the functional element 10 of the xDSL distribution unit from the second side of the functional element 10 in a fourth orientation of the testing device (not shown, testing device turned by 180° compared to Figure 7), the testing device 14 electrically connects the first contact element 12.1 and third contact element 12.3 - meaning the V contact element and the L contact element - of the functional element 10.

The contact tongue section 15 has two contact tongues 17, 18 being separated by a slot 19. The slot 19 is optional. The two contact tongues 17, 18 can be provided by one single circuit board as long as the contact section are electrically isolated.

A first contact tongue 17 provides at a first side or upper side the first and the third contact section A1, A3 and at a second side or lower side the fifth contact section B1. As mentioned above, the first contact section A1 and the third contact section A3 are both electrically connected to the fifth contact section B1.

A second contact tongue 18 provides at a first side or upper side the second and the fourth contact section A2, A4 and at a second side or lower side the sixth contact section B2. As mentioned above, the second contact section A2 and the fourth contact section A4 are both electrically connected to the sixth contact section B2.

As described above, depending on the on the orientation of the testing device 14 and on the side from which the testing device 14 is plugged into the respective functional element 10, the testing device 14 connects through different contact elements 12 of the respective functional element 10. So, different communication lines of the telecommunication system can be tested.

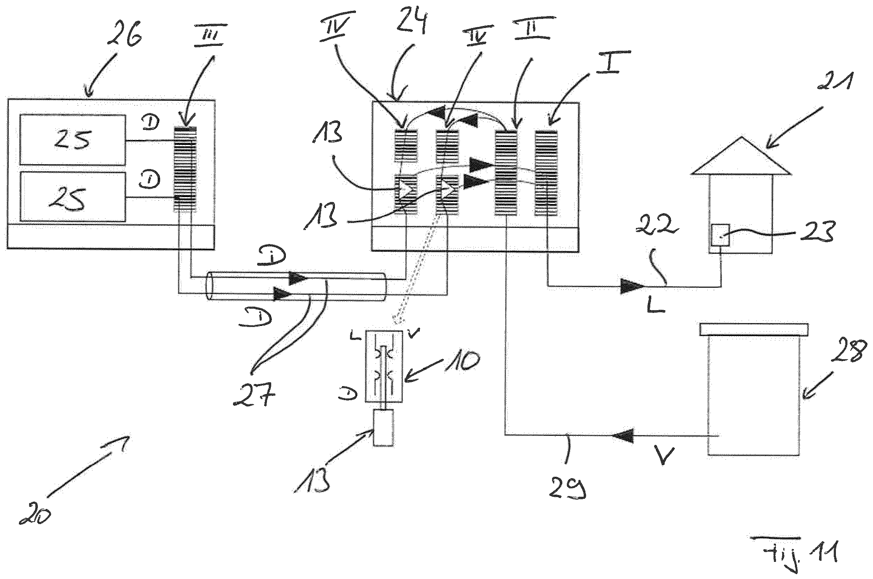

The testing device 14 is preferably used to test communication lines of the telecommunication system 20 as shown in Figure 11.

The telecommunication system 20 provides xDSL services to different customers 21. A line signal L having a combined data signal D and voice signal V is provided the respective customer 21 through a wire or cable 22. Said wire or cable 22 is connected to a port 23 at the respective customer 21 and to a functional element of the MDF block I provided in a so-called passive cabinet 24.

As mentioned above, the line signal L is a combined data signal D and voice signal V. The data signal D is provided from a so-called DSLAM 25 provided at so-called active cabinet 26 through cables or wires 27 to the so-called passive cabinet 24. Said wires or cables 27 ate connected to a functional element of a MDF block III at the active cabinet 26 and to a functional element of the xDSL distribution block IV provided in the passive cabinet 24.

The voice signal V is provided from a so-called central office 28 through a wire or cable 29. Said wire or cable 29 is connected to a port (not shown) at the central office 28 and to a functional element of the MDF block II provided in the passive cabinet 24. At the functional elements of the xDSL distribution blocks IV the data signals D and the vice signals V are combined to the line signal L though a xDSL splitter 13 plugged into a respective functional element 10 of the xDSL distribution blocks IV.

For testing communication lines of the telecommunication system 20 shown in Figure 11, a xDSL splitter 13 is removed from or pulled out of a respective functional element 10 of a respective xDSL distribution block IV.

Then, a testing device 14 is plugged into the respective functional element 10 from which the xDSL splitter 13 has been removed, namely from a defined side of the respective functional element 10 in a defined orientation of the testing device 14 (see Figures 5, 6 and 7).

Then, electrical voltages and/or electrical currents flowing over the respective functional element 10 are measured, namely with the testing device 14 being plugged into the respective functional element 10.

When the testing device 14 is plugged into the functional element 10 of the xDSL distribution block IV from the first side of the functional element 10 in a first orientation of the testing device 14 (see Figure 5), then the testing device 14 electrically connects the first contact element 12.1 and second contact element 12.2 - meaning the V contact element and the D contact element - of the functional element 10. In this situation it is possible to test a connection line extending from the MDF block III within the active cabinet 26 to the MDF block II within the passive cabinet 26.

When the testing device 14 is plugged into the functional element 10 of the xDSL distribution block IV from the first side of the functional element 10 in the second orientation of the testing device 14 (see Figure 6), then the testing device 14 electrically connects the second element 12.2 and third contact element 12.3 - meaning the D contact element and the L contact element - of the functional element 10. In this situation it is possible to test a connection line extending from the MDF block III within the active cabinet 26 to the MDF block I within the passive cabinet 26.

When the testing device 14 is plugged into the functional element 10 of the xDSL distribution unit IV from the second side of the functional element 10 in the third orientation of the testing device 14 (see Figure 7), then the testing device 14 electrically connects the first, second and third contact elements 12.1, 12.2 and 12.3 - meaning the V contact element and the D contact element and the L contact element - of the functional element 10. In this situation it is possible to test the connection lines extending from the MDF block III within the active cabinet 26 to the MDF block II within the passive cabinet 26 and from the MDF block III within the active cabinet 26 to the MDF block I within the passive cabinet 26.

### List of reference numerals

- 10: functional element
- 11: housing
- 12: contact element
- 12.1: first contact element
- 12.2: second contact element
- 12.3: third contact element
- 12.4: fourth contact element
- 12a: cutting contact
- 13: xDSL splitter
- 14: testing device
- 15: contact tongue section
- 16: handle section
- 17: contact tongue
- 18: contact tongue
- 19: slot
- 20: telecommunication system
- 21: customer
- 22: cable/wire
- 23: port
- 24: passive cabinet
- 25: DSLAM
- 26: active cabinet
- 27: cable/wire
- 28: central office
- 29: cable/wire

## Claims

1. A testing device (14) for a xDSL distribution unit of a telecommunication system,
the testing device (14) being configured to be plugged into a functional element (10) of the xDSL distribution unit,
the testing device (14) comprising a contact tongue section (15) through which the testing device (14) can be plugged into the functional element (10),
the functional element (10) of the xDSL distribution unit having at least three contact elements (12.1, 12.2, 12.3) with cutting contacts (12a) being configured to connect a wire to the respective contact element (12), namely the first contact element (12.1) to which a wire carrying a voice signal can be connected, the second contact element (12.2) to which a wire carrying a data signal can be connected and the third contact element (12.3) to which a wire carrying a line signal being a combined voice and data signal can be connected,
the contact tongue section (15) having at a first side or upper side of the contact tongue section (15) four contact sections (A1, A2, A3, A4), and at a second side or lower side of the contact tongue section (15) two contact sections (B1, B2),
wherein a first and a third contact section (A1, A3) provided at the first side or upper side of the contact tongue section are both electrically connected to a fifth contact section (B1) provided at the second side or lower side of the contact tongue section,
wherein a second and a fourth contact section (A2, A4) provided at the first side or upper side of the contact tongue section are both electrically connected to a sixth contact section (B2) provided at the second side or lower side of the contact tongue section,
wherein when the testing device (14) is plugged into the functional element of the xDSL distribution unit from a first side of the functional element in a first orientation of the testing device (14), the testing device electrically connects the first and second contact elements (12.1, 12.2) of the functional element (10),
wherein when the testing device (14) is plugged into the functional element of the xDSL distribution unit from the first side of the functional element in a second orientation of the testing device (14), the testing device electrically connects the second and third contact elements (12.2, 12.3) of the functional element (10).

2. The testing device of claim 1, **characterized in that**
when the testing device (14) is plugged into the functional element of the xDSL distribution unit from a second side of the functional element in a third orientation of the testing device (14), the testing device electrically connects the first, second and third contact elements (12.1, 12.2, 12.3) of the functional element (10).

3. The testing device of claim 2, **characterized in that**
when the testing device (14) is plugged into the functional element of the xDSL distribution unit from the second side of the functional element (10) in a fourth orientation of the testing device (14), the testing device electrically connects the first and third contact elements of the functional element.

4. The testing device of one of claims 1 to 3, **characterized in that**
the first contact element (12.1) and the third contact element (12.3) of the functional element (10) are both provided at a first side or front side of the functional element,
the second contact element (12.2) of the functional element (10) is provided at a second side or back side of the functional element,
when the testing device (14) is plugged into the functional element from the first side of the functional element (10) in the first orientation, the testing device electrically connects the first and second contact elements,
when the testing device (14) is plugged into the functional element (10) from the first side of the functional element in the second orientation, the testing device electrically connects the second and third contact elements,
when the testing device (14) is plugged into the functional element (10) from the second side of the functional element in the third orientation, the testing device electrically connects the first, second and third contact elements.

5. The testing device of one of claims 1 to 4, **characterized in that**
the contact tongue section (15) has two contact tongues (17, 18) being separated by a slot (19),
wherein a first contact tongue (17) provides at a first side or upper side the first and the third contact section (A1, A3) and at a second side or lower side the fifth contact section (B1),
wherein a second contact tongue (18) provides at a first side or upper side the second and the fourth contact section (A2, A4) and at a second side or lower side the sixth contact section (B2).

6. The testing device of one of claims 1 to 5, **characterized in that**
the testing device (14) comprises a handle section (16) carrying the contact tongue section (15), wherein testing device (14) can be plugged into a functional element (10) and pulled out of a functional element (10) through the handle section (16).

7. A telecommunication system (20) comprising
a xDSL distribution unit (IV),
the xDSL distribution unit (IV) having multiple functional elements, each functional element (10) having at least three contact elements (12.1, 12.2., 12.3) with cutting contacts (12a) being configured to connect a wire to the respective contact element, namely
a first contact element (12.1) to which a wire carrying a voice signal can be connected,
a second contact element (12.2) to which a wire carrying a data signal can be connected and
a third contact element (12.3) to which a wire carrying a line signal being a combined voice and data signal can be connected,
the xDSL distribution unit (IV) having multiple xDSL splitters (13), each xDSL splitter (13) being inserted into a respective functional element (10),
at least one testing device (14) of one of claims 1 to 6, the respective testing device (14) being insertable into a respective functional element (10) when the respective xDSL splitter (13) has been removed.

8. A method for testing a telecommunication system (20) according to claim 7, the method comprising the steps of:
removing a respective xDSL splitter (13) from a respective functional element (10) of the xDSL distribution unit (IV),
plugging a testing device (14) into a respective functional element (10) from which the xDSL splitter (13) has been removed from a defined side of the respective functional element (10) in a defined orientation of the testing device (14),
measuring electrical voltages and/or electrical currents flowing over the respective functional element (10) with the testing device being plugged into the respective functional element (10).

## Patentansprüche

1. Testvorrichtung (14) für eine xDSL-Verteilungseinheit eines Telekommunikationssystems,
wobei die Testvorrichtung (14) konfiguriert ist, in ein Funktionselement (10) der xDSL-Verteilungseinheit eingesteckt zu werden,
wobei die Testvorrichtung (14) einen Kontaktzungenabschnitt (15) umfasst, durch den die Testvorrichtung (14) in das Funktionselement (10) eingesteckt werden kann,
wobei das Funktionselement (10) der xDSL-Verteilungseinheit mindestens drei Kontaktelemente (12.1, 12.2, 12.3) mit schneidenden Kontakten (12a) besitzt, die konfiguriert sind, einen Draht mit dem jeweiligen Kontaktelement (12) zu verbinden, nämlich dem ersten Kontaktelement (12.1), mit dem ein Draht, der ein Sprachsignal überträgt, verbunden werden kann, dem zweiten Kontaktelement (12.2), mit dem ein Draht, der ein Datensignal überträgt, verbunden werden kann, und dem dritten Kontaktelement (12.3), mit dem ein Draht, der ein Leitungssignal überträgt, das ein vereinigtes Sprach- und Datensignal ist, verbunden werden kann,
wobei der Kontaktzungenabschnitt (15) auf einer ersten Seite oder oberen Seite des Kontaktzungenabschnitts (15) vier Kontaktabschnitte (A1, A2, A3, A4) und auf einer zweiten Seite oder unteren Seite des Kontaktzungenabschnitts (15) zwei Kontaktabschnitte (B1, B2) besitzt,
wobei ein erster und ein dritter Kontaktabschnitt (A1, A3), die auf der ersten Seite oder der oberen Seite des Kontaktzungenabschnitts vorgesehen sind, beide mit einem fünften Kontaktabschnitt (B1), der auf der zweiten Seite oder der unteren Seite des Kontaktzungenabschnitts vorgesehen ist, elektrisch verbunden sind,
wobei ein zweiter und ein vierter Kontaktabschnitt (A2, A4), die auf der ersten Seite oder der oberen Seite des Kontaktzungenabschnitts vorgesehen sind, beide mit einem sechsten Kontaktabschnitt (B2), der auf der zweiten Seite oder der unteren Seite des Kontaktzungenabschnitts vorgesehen ist, elektrisch verbunden sind,
wobei dann, wenn die Testvorrichtung (14) in das Funktionselement der xDSL-Verteilungseinheit von einer ersten Seite des Funktionselements in einer ersten Orientierung der Testvorrichtung (14) eingesteckt wird, die Testvorrichtung das erste und das zweite Kontaktelement (12.1, 12.2) des Funktionselements (10) elektrisch verbindet,
wobei dann, wenn die Testvorrichtung (14) in das Funktionselement der xDSL-Verteilungseinheit von der ersten Seite des Funktionselements in einer zweiten Orientierung der Testvorrichtung (14) eingesteckt wird, die Testvorrichtung das zweite und das dritte Kontaktelement (12.2, 12.3) des Funktionselements (10) elektrisch verbindet.

2. Testvorrichtung nach Anspruch 1, **dadurch gekennzeichnet, dass**
dann, wenn die Testvorrichtung (14) in das Funktionselement der xDSL-Verteilungseinheit von einer zweiten Seite des Funktionselements in einer dritten Orientierung der Testvorrichtung (14) eingesteckt wird, die Testvorrichtung das erste, das zweite und das dritte Kontaktelement (12.1, 12.2, 12.3) des Funktionselements (10) elektrisch verbindet.

3. Testvorrichtung nach Anspruch 2, **dadurch gekennzeichnet, dass**
dann, wenn die Testvorrichtung (14) in das Funktionselement der xDSL-Verteilungseinheit von der zweiten Seite des Funktionselements (10) in einer vierten Orientierung der Testvorrichtung (14) eingesteckt wird, die Testvorrichtung das erste und das dritte des Funktionselements elektrisch verbindet.

4. Testvorrichtung nach einem der Ansprüche 1 bis 3, **dadurch gekennzeichnet, dass**
das erste Kontaktelement (12.1) und das dritte Kontaktelement (12.3) des Funktionselements beide auf einer ersten Seite oder Vorderseite des Funktionselements (10) vorgesehen sind,
wobei das zweite Kontaktelement (12.2) des Funktionselements (10) auf einer zweiten Seite oder Rückseite des Funktionselements vorgesehen ist,
wobei dann, wenn die Testvorrichtung (14) in das Funktionselement von der ersten Seite des Funktionselements (10) in einer ersten Orientierung eingesteckt wird, die Testvorrichtung das erste und das zweite Kontaktelement elektrisch verbindet,
wobei dann, wenn die Testvorrichtung (14) in das Funktionselement (10) von der ersten Seite des Funktionselements in der zweiten Orientierung eingesteckt wird, die Testvorrichtung das zweite und das dritte Kontaktelement elektrisch verbindet,
wobei dann, wenn die Testvorrichtung (14) in das Funktionselement (10) von der zweiten Seite des Funktionselements in der dritten Orientierung eingesteckt wird, die Testvorrichtung das erste, das zweite und das dritte Kontaktelement elektrisch verbindet.

5. Testvorrichtung nach einem der Ansprüche 1 bis 4, **dadurch gekennzeichnet, dass**
der Kontaktzungenabschnitt (15) zwei Kontaktzungen (17, 18) besitzt, die durch einen Schlitz (19) getrennt sind,
wobei eine erste Kontaktzunge (17) auf einer ersten Seite oder oberen Seite den ersten und den dritten Kontaktabschnitt (A1, A3) und auf einer zweiten Seite oder unteren Seite den fünften Kontaktabschnitt (B1) bereitstellt,
wobei eine zweite Kontaktzunge (18) auf einer ersten Seite oder oberen Seite den zweiten und den vierten Kontaktabschnitt (A2, A4) und auf einer zweiten Seite oder unteren Seite den sechsten Kontaktabschnitt (B2) bereitstellt.

6. Testvorrichtung nach einem der Ansprüche 1 bis 5, **dadurch gekennzeichnet, dass**
die Testvorrichtung (14) einen Griffabschnitt (16) umfasst, der den Kontaktzungenabschnitt (15) trägt, wobei die Testvorrichtung (14) durch den Griffabschnitt (16) in ein Funktionselement (10) eingesteckt und aus einem Funktionselement (10) herausgezogen werden kann.

7. Telekommunikationssystem (20), das Folgendes umfasst:
eine xDSL-Verteilungseinheit (IV),
wobei die xDSL-Verteilungseinheit (IV) mehrere Funktionselemente besitzt, wobei jedes Funktionselement (10) mindestens drei Kontaktelemente (12.1, 12.2, 12.3) mit schneidenden Kontakten (12a) besitzt, die konfiguriert sind, einen Draht mit dem jeweiligen Kontaktelement zu verbinden, nämlich
einem erstem Kontaktelement (12.1), mit dem einem Draht, der ein Sprachsignal überträgt, verbunden werden kann,
einem zweiten Kontaktelement (12.2), mit dem ein Draht, der ein Datensignal überträgt, verbunden werden kann, und
einem dritten Kontaktelement (12.3), mit dem ein Draht, der ein Leitungssignal überträgt, das ein vereinigtes Sprach- und Datensignal ist, verbunden werden kann,
wobei die xDSL-Verteilungseinheit (IV) mehrere xDSL-Splitter (13) besitzt, wobei jeder xDSL-Splitter (13) in ein jeweiliges Funktionselement (10) eingefügt ist,
mindestens eine Testvorrichtung (14) nach einem der Ansprüche 1 bis 6, wobei die jeweilige Testvorrichtung (14) in ein jeweiliges Funktionselement (10) eingefügt werden kann, wenn der jeweilige xDSL-Splitter (13) entfernt wurde.

8. Verfahren zum Testen eines Telekommunikationssystems (20) nach Anspruch 7, wobei das Verfahren die folgenden Schritte umfasst:
Entfernen eines jeweiligen xDSL-Splitters (13) von einem jeweiligen Funktionselement (10) der xDSL-Verteilungseinheit (IV),
Einstecken einer Testvorrichtung (14) in ein jeweiliges Funktionselement (10), von dem der xDSL-Splitter (13) entfernt wurde, von einer definierten Seite des jeweiligen Funktionselements (10) in einer definierten Orientierung der Testvorrichtung (14),
Messen elektrischer Spannungen und/oder elektrischer Ströme, die über das jeweilige Funktionselement (10) strömen, wobei die Testvorrichtung in das jeweilige Funktionselement (10) eingesteckt ist.

## Revendications

1. Dispositif de test (14) pour une unité de distribution xDSL d'un système de télécommunication,
le dispositif de test (14) étant configuré pour être enfiché dans un élément fonctionnel (10) de l'unité de distribution xDSL,
le dispositif de test (14) comprenant une section de languette de contact (15) à travers laquelle le dispositif de test (14) peut être enfiché dans l'élément fonctionnel (10),
l'élément fonctionnel (10) de l'unité de distribution xDSL ayant au moins trois éléments de contact (12.1, 12.2, 12.3) avec des contacts coupants (12a) configurés pour connecter un fil à l'élément de contact respectif (12), à savoir le premier élément de contact (12.1) auquel un fil portant un signal vocal peut être connecté, le deuxième élément de contact (12.2) auquel un fil portant un signal de données peut être connecté et le troisième élément de contact (12.3) auquel un fil portant un signal de ligne étant un signal combiné vocal et de données peut être connecté,
la section de languette de contact (15) ayant sur un premier côté ou sur un côté supérieur de la section de languette de contact (15) quatre sections de contact (A1, A2, A3, A4), et sur un deuxième côté ou sur un côté inférieur de la section de languette de contact (15) deux sections de contact (B1, B2),
où une première section de contact et une troisième section de contact (A1, A3) pourvues sur le premier côté ou sur le côté supérieur de la section de languette de contact sont toutes deux connectées électriquement à une cinquième section de contact (B1) pourvue sur le deuxième côté ou sur le côté inférieur de la section de languette de contact,
où une deuxième section de contact et une quatrième section de contact (A2, A4) pourvues sur le premier côté ou sur le côté supérieur de la section de languette de contact sont toutes deux connectées électriquement à une sixième section de contact (B2) pourvue sur le deuxième côté ou sur le côté inférieur de la section de languette de contact,
où, lorsque le dispositif de test (14) est enfiché dans l'élément fonctionnel de l'unité de distribution xDSL depuis un premier côté de l'élément fonctionnel dans une première orientation du dispositif de test (14), le dispositif de test connecte électriquement les premier et deuxième éléments de contact (12.1, 12.2) de l'élément fonctionnel (10),
où, lorsque le dispositif de test (14) est enfiché dans l'élément fonctionnel de l'unité de distribution xDSL depuis le premier côté de l'élément fonctionnel dans une deuxième orientation du dispositif de test (14), le dispositif de test connecte électriquement les deuxième et troisième éléments de contact (12.2, 12.3) de l'élément fonctionnel (10).

2. Dispositif de test selon la revendication 1, **caractérisé en ce que** :
lorsque le dispositif de test (14) est enfiché dans l'élément fonctionnel de l'unité de distribution xDSL depuis un deuxième côté de l'élément fonctionnel dans une troisième orientation du dispositif de test (14), le dispositif de test connecte électriquement les premier, deuxième et troisième éléments de contact (12.1, 12.2, 12.3) de l'élément fonctionnel (10).

3. Dispositif de test selon la revendication 2, **caractérisé en ce que** :
lorsque le dispositif de test (14) est enfiché dans l'élément fonctionnel de l'unité de distribution xDSL depuis le deuxième côté de l'élément fonctionnel (10) dans une quatrième orientation du dispositif de test (14), le dispositif de test connecte électriquement les premier et troisième éléments de contact de l'élément fonctionnel.

4. Dispositif de test selon l'une des revendications 1 à 3, **caractérisé en ce que** :
le premier élément de contact (12.1) et le troisième élément de contact (12.3) de l'élément fonctionnel (10) sont tous deux pourvus sur un premier côté ou sur un côté frontal de l'élément fonctionnel,
le deuxième élément de contact (12.2) de l'élément fonctionnel (10) est pourvu sur un deuxième côté ou sur un côté arrière de l'élément fonctionnel,
lorsque le dispositif de test (14) est enfiché dans l'élément fonctionnel depuis le premier côté de l'élément fonctionnel (10) dans la première orientation, le dispositif de test connecte électriquement les premier et deuxième éléments de contact,
lorsque le dispositif de test (14) est enfiché dans l'élément fonctionnel (10) depuis le premier côté de l'élément fonctionnel dans la deuxième orientation, le dispositif de test connecte électriquement les deuxième et troisième éléments de contact,
lorsque le dispositif de test (14) est enfiché dans l'élément fonctionnel (10) depuis le deuxième côté de l'élément fonctionnel dans la troisième orientation, le dispositif de test connecte électriquement les premier, deuxième et troisième éléments de contact.

5. Dispositif de test selon l'une des revendications 1 à 4, **caractérisé en ce que**
la section de languette de contact (15) a deux languettes de contact (17, 18) étant séparées par une fente (19),
où une première languette de contact (17) fournit au niveau d'un premier côté ou au niveau du côté supérieur la première section de contact et la troisième section de contact (A1, A3) et au niveau d'un deuxième côté ou au niveau du côté inférieur la cinquième section de contact (B1),
où une deuxième languette de contact (18) fournit au niveau d'un premier côté ou au niveau d'un côté supérieur, la deuxième section de contact et la quatrième section de contact (A2, A4) et, au niveau d'un deuxième côté ou au niveau d'un côté inférieur, la sixième section de contact (B2).

6. Dispositif de test selon l'une des revendications 1 à 5, **caractérisé en ce que** :
le dispositif de test (14) comprend une section de poignée (16) portant la section de languette de contact (15), où le dispositif de test (14) peut être enfiché dans un élément fonctionnel (10) et retiré d'un élément fonctionnel (10) par la section de poignée (16).

7. Système de télécommunication (20) comprenant :
une unité de distribution xDSL (IV),
l'unité de distribution xDSL (IV) ayant de multiples éléments fonctionnels, chaque élément fonctionnel (10) ayant au moins trois éléments de contact (12.1, 12.2, 12.3) avec des contacts coupants (12a) étant configurés pour connecter un fil à l'élément de contact respectif, à savoir :
un premier élément de contact (12.1) auquel un fil portant un signal vocal peut être connecté,
un deuxième élément de contact (12.2) auquel un fil portant un signal de données peut être connecté, et
un troisième élément de contact (12.3) auquel un fil portant un signal de ligne étant un signal combiné vocal et de données peut être connecté,
l'unité de distribution xDSL (IV) ayant plusieurs répartiteurs xDSL (13), chaque répartiteur xDSL (13) étant inséré dans un élément fonctionnel respectif (10) ,
au moins un dispositif de test (14) de l'une des revendications 1 à 6, le dispositif de test respectif (14) pouvant être inséré dans un élément fonctionnel respectif (10) lorsque le répartiteur xDSL respectif (13) a été retiré.

8. Procédé de test d'un système de télécommunication (20) selon la revendication 7, le procédé comprenant les étapes suivantes :
retirer un répartiteur xDSL respectif (13) d'un élément fonctionnel respectif (10) de l'unité de distribution xDSL (IV),
enficher un dispositif de test (14) dans un élément fonctionnel respectif (10) duquel le répartiteur xDSL (13) a été retiré d'un côté défini de l'élément fonctionnel respectif (10) dans une orientation définie du dispositif de test (14),
mesurer les tensions électriques et/ou les courants électriques circulant sur l'élément fonctionnel respectif (10), le dispositif de test étant branché sur l'élément fonctionnel respectif (10).
